(19) Europäisches Patentamt

European Patent Office

Office européen des brevets

(11) **EP 1 100 989 B1**

## (12) EUROPÄISCHE PATENTSCHRIFT

(45) Veröffentlichungstag und Bekanntmachung des Hinweises auf die Patenterteilung:
**23.04.2003 Patentblatt 2003/17**

(21) Anmeldenummer: **99928990.3**

(22) Anmeldetag: **19.07.1999**

(51) Int Cl.⁷: **D06H 3/08**, G01N 21/89

(86) Internationale Anmeldenummer:
**PCT/CH99/00330**

(87) Internationale Veröffentlichungsnummer:
**WO 00/006823 (10.02.2000 Gazette 2000/06)**

(54) **VERFAHREN UND VORRICHTUNG ZUR BEURTEILUNG VON FEHLERN IN TEXTILEN FLÄCHENGEBILDEN**

METHOD AND DEVICE FOR EVALUATING DEFECTS IN FLAT TEXTILE STRUCTURES

PROCEDE ET DISPOSITIF POUR EVALUER LES DEFAUTS DANS DES STRUCTURES TEXTILES EN NAPPE

(84) Benannte Vertragsstaaten:
**BE CH DE FR GB IT LI**

(30) Priorität: **24.07.1998 CH 156298**

(43) Veröffentlichungstag der Anmeldung:
**23.05.2001 Patentblatt 2001/21**

(73) Patentinhaber: **ZELLWEGER LUWA AG**
**8610 Uster (CH)**

(72) Erfinder: **LEUENBERGER, Rolf**
**CH-8330 Pfäffikon (CH)**

(56) Entgegenhaltungen:
**EP-A- 0 306 742     WO-A-98/08080**
**WO-A-99/14580     US-A- 5 006 722**

- **BRZAKOVIC D ET AL: "Designing a defect classification system: a case study" PATTERN RECOGNITION, Bd. 29, Nr. 8, August 1996 (1996-08), Seite 1401-1419 XP004008127**
- **NICKOLAY B ET AL: "AUTOMATISCHE WARENSCHAU - UTOPIE ODER MOEGLICHE REALITAET?" MELLIAND TEXTILBERICHTE, INTERNATIONAL TEXTILE REPORTS, Bd. 74, Nr. 1, 1. Januar 1993 (1993-01-01), Seiten 70-76, XP000335867**

**Beschreibung**

Die Erfindung betrifft ein Verfahren und eine Vorrichtung zur Beurteilung von Fehlern in textilen Flächengebilden.

Bei der Inspektion von Geweben wurde beispielsweise bisher so vorgegangen, dass das inspizierende Personal anhand von Beispielen über zulässige und unzuläsige Fehler im Gewebe geschult wurde. Bei der eigentlichen Inspektion wurde dann versucht, Fehler von Auge zu erfassen und einem vorbekannten Beispiel zuzuordnen. Fehler, die Beispielen zu entsprechen schienen, die untolerierbar sind, wurden als solche markiert, andere als tolerierbare Fehler anschliessend ignoriert.

Bei automatischen Inspektionssystemen wurden Bilder des Gewebes Filtern zugeführt, die Eigenschaften des Bildes herausfilterten und diese anschliessend mit vorgegebenen Schwellwerten verglichen. Je nach Resultat des Vergleiches wurden mögliche Fehler in den Bildern markiert oder eben ignoriert.

Ein Nachteil des ersten Verfahrens ist darin zu sehen, dass die Beurteilung eines Fehlers durch den Menschen subjektiv und nicht immer gleich reproduzierbar ist. Zudem gerät der Mensch dann in Zweifel, wenn Grenzfälle vorliegen. Diese werden dann nicht immer in gleichem Sinne behandelt. So führt diese Art der Inspektion zu einer uneinheitlichen Beurteilung von Gewebefehlern. Zudem ist diese Art der Beurteilung nicht immer gleich schnell. Sie ist insbesondere dann verzögert, wenn der vorliegende Fehler schwierig einzustufen ist und Zweifel den Entscheid verzögern.

Beim zweiten Verfahren ist ein Nachteil darin zu sehen, dass die genannten Vergleiche mit Schwellwerten Parameter betreffen, die nicht direkt das Bild oder den Fehler betreffen. Beispielsweise kann ein solcher Parameter eine Grenzfrequenz sein, die zwar für das Bild eine Rolle spielt, die aber zusammen mit anderen Parametern wirkt und für sich betrachtet eine nur schwer erkennbare und nicht immer gleiche Wirkung auf das Bild ausübt. Bei solchen Verfahren hat man sich insbesondere daran orientiert, was einfach automatisierbar ist. Man hat dabei aber in Kauf genommen, dass das Resultat nicht immer eindeutig ausfällt und dem gewünschten Zweck dient.

Aus D. Brzakovic und N. Vujovic "Designing a defect classification System: a case study", veröffentlicht in "Pattern Recognition" Band 29, Nr. 8, August 1996, ist ein Verfahren bekannt mit dem man als Bahn vorliegendes Material im Hinblick auf Fehler prüfen kann. Dabei werden mit Hilfe geeigneter Vorverarbeitungsverfahren und Bildaufnahmetechniken Merkmale aus dem Fehlerbild extrahiert, welche eine Klassierung nach Ursachen ermöglichen. So wird gezeigt, wie Fehler mit einer groben Auflösung erkannt und mit einer feineren Auflösung weiter untersucht und anschliessend klassiert werden können.

Aus der US 5,006,722 ist eine Fehleranzeige für automatische Inspektionssysteme bekannt, die mehrere Felder aufweist, von denen jedes für eine bestimmte Art Fehler zuständig ist. Durch verschiedene Farben kann in jedem Feld angezeigt werden, wenn eine vorbestimmbare Anzahl Fehler aufgetreten ist.

Aus der WO 98/08080 ist ein Verfahren und eine Vorrichtung zur Erkennung von Fehlern in textilen Flächengebilden bekannt, womit Helligkeitswerte auf einem Gebilde erfasst und einem neuronalen Netzwerk zugeführt werden. Dieses führt eine nichtlineare Filteroperation durch und gibt an, ob ein Fehler vorliegt oder nicht.

Aus der EP 0 306 742 ist ein Verfahren zur automatischen Erkennung von Fehlern in bewegten Warenbahnen bekannt. Dabei wird die Warenbahn durch eine Vielzahl quer über der Warenbahn angeordneter Sensorelemente abgetastet und die erfassten Signale zwischengespeichert. Diese werden dann mit Referenzwerten verglichen, die anhand einer als fehlerfrei geltenden Warenprobe vor der Messung festgelegt wurden.

Es ist klar, dass flecken-, punkt- oder linienförmige Fehler mit vergleichsweise geringer Ausdehnung in textilen Flächengebilden in Abhängigkeit der Struktur der Oberfläche eines solchen Flächengebildes wahrgenommen werden. So werden in sehr homogenen Oberflächen kleinste Unregelmässigkeiten durch das Auge deutlich wahrgenommen und wirken als störende Fehler. Demgegenüber vermindert ein unregelmässiges Bild der Oberfläche die Auffälligkeit kleiner Störungen. Ein Problem besteht darin, ein gültiges Mass für die Ausprägung der Fehler zu finden, die dem subjektiven Empfinden gerecht wird. Insbesondere ist für die Einstellung der Empfindlichkeit an automatischen Inspektionssystemen ein interpretierbarer Massstab verlangt.

Die Erfindung, wie sie in den Ansprüchen gekennzeichnet ist, löst deshalb die Aufgabe, ein Verfahren und eine Vorrichtung zu schaffen, die es erlauben, eine wiederholbare, rasche und eindeutige Beurteilung von Fehlern in textilen Flächengebilden vorzunehmen.

Dies wird gemäss der Erfindung dadurch erreicht, dass gemäss dem Verfahren ein Bild eines Flächengebildes erzeugt wird, wobei in dem Bild mindestens zwei Darstellungen von Fehlern im Flächengebilde erzeugt werden, die in Bezug auf Länge und Kontrast des Fehlers unterschiedlich sind. Ausgehend von diesen Darstellungen wird die Zulässigkeit und Unzulässigkeit eines Fehlers im Flächengebilde entschieden. Besonders vorteilhaft ist eine tabellen- oder matrixförmige Anordnung von Darstellungen von Fehlern unterschiedlicher Ausprägung. Dabei dient ein Bild des fehlerlosen Flächengebildes als Hintergrund. So können die Darstellungen der Fehler in der aufgabenspezifischen Umgebung beurteilt werden. Dazu wird das Bild mit einem zweidimensionalen Raster in Felder aufgeteilt, wobei als erste Dimension die Länge der Fehler und als zweite Dimension der Kontrast der Fehler vorgesehen ist. Dem Bild werden auch Empfindlichkeitskurven überlagert.

Die durch die Erfindung erreichten Vorteile sind insbesondere darin zu sehen, dass damit ein Verfahren vorliegt, mit dem Fehler in textilen Flächengebilden objektiv und auch automatisiert beurteilt werden können. Das Verfahren eignet sich auch zur Festlegung der Empfindlichkeit von automatisierten Inspektionssystemen für textile Flächengebilde. Durch die Erfindung ist auch eine Vorrichtung gegeben, mit der automatisch und objektiv untolerierbare Fehler in Flächengebilden ohne unmittelbare Beurteilung durch den Menschen ausgesondert werden können. Gemäss der Erfindung können in einerm Flächengebilde Fehler beurteilt werden, die sowohl durch den Aufbau, wie auch durch das verwendete Material bewirkt werden. Am Beispiel eines Gewebes bedeutet dies, dass sowohl Fehler in der Führung einzelner Schuss- oder Kettfäden, wie auch Fehler die durch das Gam an sich bewirkt werden, wie z.B. starke Durchmesserabweichungen, beurteilt werden können.

Im folgenden wird die Erfindung anhand eines Beispiels und mit Bezug auf die beiliegenden Zeichnungen näher erläutert. Es zeigen:

Figur 1 ein Bild eines Flächengebildes mit mehreren Darstellungen von Fehlern,

Figur 2 ein Bild gemäss Fig. 1 für ein anderes Flächengebilde,

Figur 3 eine Darstellung von Empfindlichkeitskurven,

Figur 4 eine einzelne Darstellung eines Fehlers in vergrössertem Massstab,

Figur 5 eine Darstellung der Empfindlichkeitskurven auf einem Flächengebilde,

Figur 6 ein Blockschema für den Aufbau einer erfindungsgemässen Vorrichtung und

Figur 7 eine Darstellung von Charakteristiken einer Inspektionsvorrichtung.

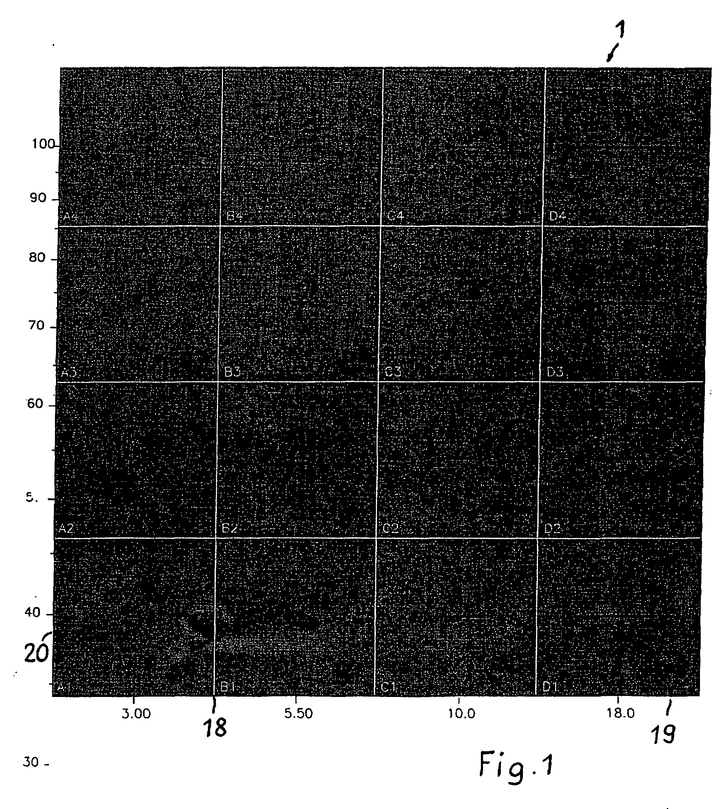

Fig. 1 zeigt ein Bild 1 eines textilen Flächengebildes, wie beispielsweise eines Gewebes, eines Vlieses usw. in das mehrere Darstellungen 2 bis 17 von Fehlern künstlich eingefügt sind. Diese Fehler sind in Bezug auf Länge und Kontrast unterschiedlich, was bedeutet, dass jeder Fehler entweder eine eigene Länge oder eine eigene Kontraststufe aufweist. Das Bild 1 ist durch einen zweidimensionalen Raster 18, der durch vertikale und horizontale Linien gebildet ist in Felder A1 - A4, B1 - B4, C1 - C4 und D1 - D4 aufgeteilt und in jedem Feld ist in der Mitte ein Fehler dargestellt. Jedem Feld ist eine Länge für den dargestellten Fehler zugeordnet, hier beispielsweise durch Zahlen 3.00, 5.50, 10.0 und 18.0. Diese sind längs einer horizontalen Achse 19 angeordnet. Längs einer vertikalen Achse 20 sind Werte 40 - 100 für die Empfindlichkeit oder das Mass des Kontrastes des Fehlers zum fehlerlosen Hintergrund oder textilen Flächengebildes angegeben.

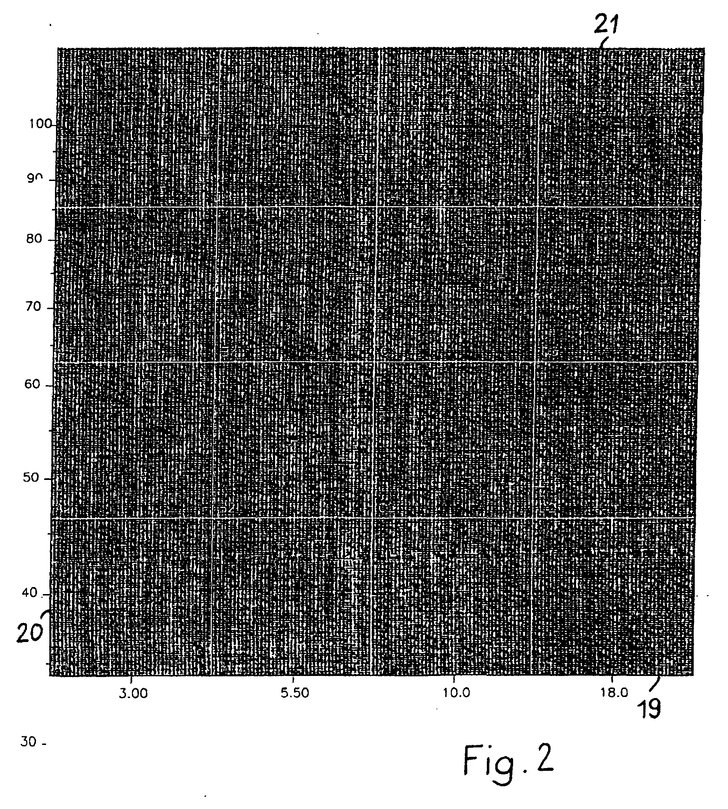

Fig. 2 zeigt ein Bild 21, das genau gleich wie das Bild 1 aufgebaut und mit Achsen 19, 20 und einem Raster 18 versehen ist. Es sind darin auch die genau gleichen Fehler 2 - 17 dargestellt. Der einzige Unterschied besteht darin, dass es ein anderes Flächengebilde, mit einer vergleichsweise groben Struktur als Hintergrund für die Fehler zeigt.

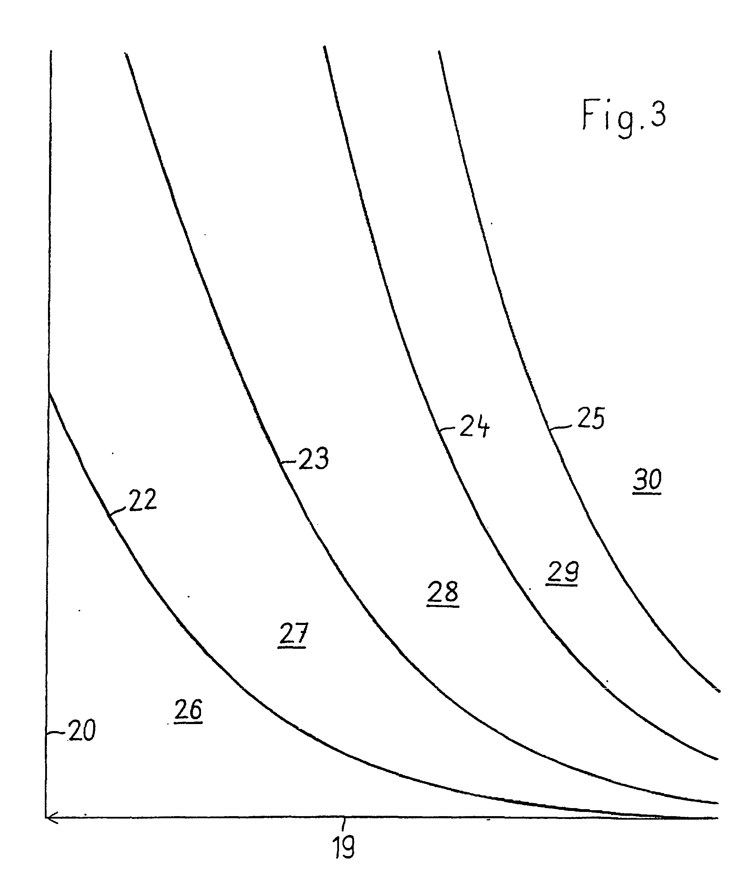

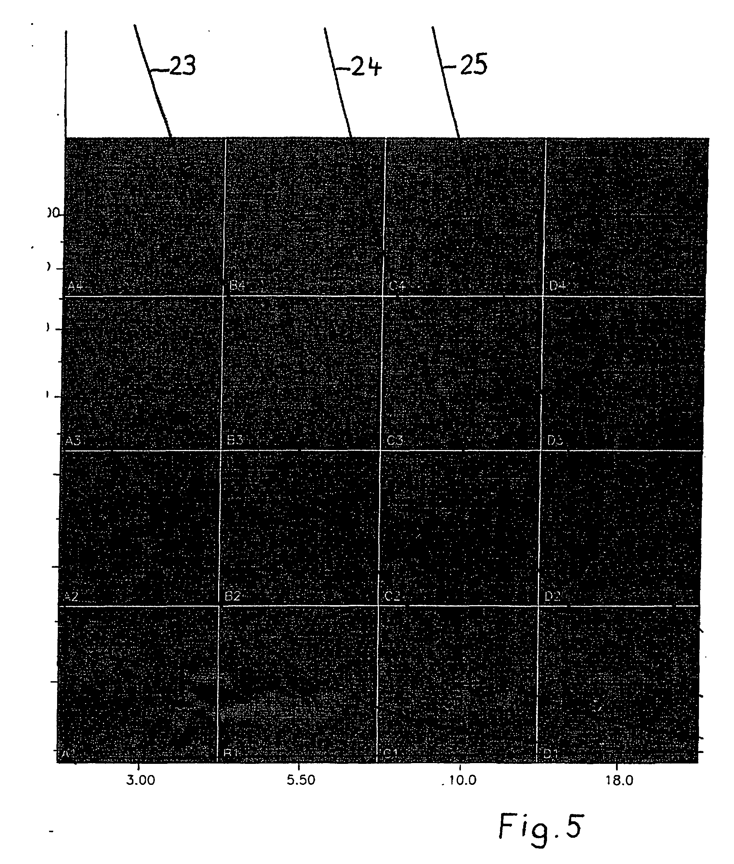

Fig. 3 zeigt Empfindlichkeitskurven 22, 23, 24 und 25, die über den aus den Fig. 1 und 2 bekannten Achsen 19, 20 aufgezeichnet sind. Die Empfindlichkeitskurven 22 - 25 begrenzen hier beispielsweise vier Stufen für die Empfindlichkeit der Wahmehmung eines Fehlers im Flächengebilde. Die Empfindlichkeitskurve 22 begrenzt dabei zwischen sich und den Achsen 19 und 20 ein Gebiet 26, in dem Fehler mit ihrer Länge und ihrem Kontrast liegen können, die auch bei hohen Ansprüchen an das Aussehen des Flächengebildes noch zulässig sein könnten. Zwischen den Empfindlichkeitskurven 22 und 23 liegt ein Gebiet 27, das gegenüber der Empfindlichkeit im Gebiet 26 bereits reduziert ist. So ist die Empfindlichkeit wie sie die Gebiete 28, 29 und 30 zwischen den Empfindlichkeitskurven 23 und 24 sowie 24 und 25 oder jenseits der Empfindlichkeitskurve 25 darstellen, noch weiter reduziert, was bedeutet, dass Fehler, die mehr oder weniger gut sichtbar sind, durch eine Vorgabe gemäss einer dieser Empfindlichkeitskurven als zulässig erachtet werden können.

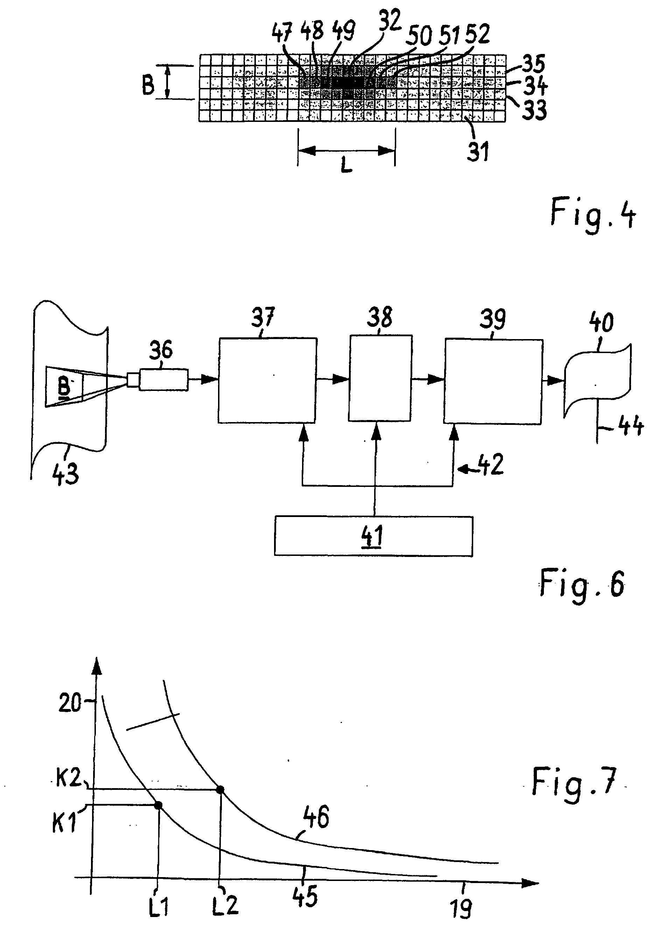

Fig. 4 zeigt eine Darstellung eines Fehlers 32 in einem Bild eines textilen Flächengebildes. Das Bild des Flächengebildes ist für die Ausgabe über Mittel für die elektronische Darstellung wie z.B. Bildschirme oder Drucker, in einzelne Bildpunkte aufgeteilt, die beispielsweise durch einen Grauwert in einem Feld dargestellt sind. Ein solcher Bildpunkt ist beispielsweise mit 31 bezeichnet. Die Bildpunkte sind in horizontalen Zeilen aneinandergereiht. Vorzugsweise erstreckt sich ein Fehler über drei nebeneinanderliegende Zeilen, wie hier über Zeilen 33, 34 und 35. Man erkennt hier, dass die Bildpunkte gegen das Zentrum des Fehlers 32 hin stufenweise dunkler werden oder eben mit der Umgebung, die das Flächengebilde darstellt, stärker kontrastieren. Dies gilt sowohl über die Länge L wie auch über die Breite B des Fehlers 32 gesehen. Allerdings sind über die Breite B gesehen nur zwei Stufen möglich, wenn die Breite drei Zeilen beträgt, nämlich von jeder Seite gesehen je eine Stufe. Die Darstellung eines Fehlers ist gegenüber einem realen Fehler insofern möglichst getreu nachgebildet, als jedem Fehler in dieser Bildpunktdarstellung ein Übergangsbereich zugeordnet ist. Hier bilden die Bildpunkte in den Zeilen 33 und 35 sowie die Bildpunkte 47 bis 52 in Zeile 34 diesen Übergangsbereich. Dieser Darstellung liegt beispielsweise die Annahme zugrunde, dass eine Zeile im Bild etwa einem Faden oder Garn im Gewebe entspricht. Eine Zeile kann aber auch mehrere Fäden darstellen. In diesem Falle stellt ein Bildpunkt eine Mittelung von Fäden und Zwischenräumen zwischen den Fäden und somit eine zweidimensionale Mittelung einer dreidimensionalen Form dar.

Fig. 5 zeigt eine Darstellung eines Bildes 1 entsprechend der Fig. 1 wobei aber die Empfindlichkeitskurven entsprechend der Fig. 3 darüber gelegt sind.

Fig. 6 zeigt einen Aufbau einer erfindungsgemässen Vorrichtung. Diese besteht aus einer Bildaufnahmevorrichtung 36, einem ersten Bildspeicher 37, einer Recheneinheit 38, einem zweiten Bildspeicher 39 und einer Ausgabeeinheit 40, alle in Serie geschaltet. Sie umfasst auch eine Adressierlogik 41 für Bildpunkte, welche an den ersten und den zweiten Bildspeicher 37, 39 sowie an die Recheneinheit 38 über einen Bus 42 angeschlossen ist. Die Bildaufnahmevorrichtung 36 ist dabei auf ein textiles Flächengebilde 43 ausgerichtet und eingestellt. Die Ausgabeeinheit 40 weist vorzugsweise einen Anschluss 44 für die Eingabe von Charakteristiken einer Inspektionsvorrichtung für Fehler in textilen Flächengebilden auf.

Fig. 7 zeigt über Achsen 19 und 20, wie sie aus den Figuren 1 und 2 bekannt sind, aufgetragene Charakteristiken 45, 46 einer automatischen Vorrichtung zur Inspektion von textilen Flächengebilden. An dieser Vorrichtung kann beispielsweise die Länge eines Fehlers und der Kontrast, der durch den Fehler im Bild bewirkt wird eingestellt werden. Die gezeigten Charakteristiken 45, 46 stellen mögliche Vorgaben für die Vorrichtung dar, mit der sie arbeitet und gemäss der sie Fehler beurteilt.

Die Wirkungsweise des erfindungsgemässen Verfahrens ist wie folgt:

Zuerst wird ein Bild B (Fig. 6) eines textilen Flächengebildes erzeugt, wie es beispielsweise aus der Fig. 1 bekannt ist, allerdings ohne Fehler oder Darstellungen von Fehlern darin. Dies kann mit der Bildaufnahmevorrichtung 36 geschehen. Dieses Bild B wird dem ersten Bildspeicher 37 zugeführt und darin gespeichert. Dieses Bild B kann durch Beleuchtung mit Auflicht, also frontal auftreffendem Licht oder mit Durchlicht erzeugt werden, bei dem die Bildaufnahmevorrichtung 36 und eine Lichtquelle nicht auf derselben Seite des Flächengebildes angeordnet sind.

Um eine Grundlage für eine Beurteilung von reellen Fehlern im Flächengebilde 43 zu erstellen, werden im Bild B Darstellungen von typischen Fehlern eingebaut. Dazu wird das Bild B zuerst durch einen zweidimensionalen Raster 18 in Felder A, B, C, D usw. aufgeteilt. Dabei stellt die eine Dimension des Rasters 18 das Mass für die Länge L der Fehler, und zwar vorzugsweise in einer Richtung für kontinuierlich zunehmende Länge der Fehler dar. Die andere Dimension des Rasters in der anderen Richtung stellt ein Mass für zunehmenden Kontrast K der Fehler dar. Vorzugsweise ist eine oder beide Dimensionen in logarithmischem Massstab zu skalieren. Innerhalb des Bildes werden nun an vorgegebenen, vorzugsweise gleichverteilten Orten im Raster 18, Darstellungen von Fehlern, hier beispielsweise die Fehler 2 - 17 erzeugt. Deren Länge und Kontrast entspricht dabei dem Ort der Darstellung im Raster 18. Die Darstellungen der Fehler werden durch Veränderung der Helligkeitswerte mehrerer Bildpunkte des Bildes B erzeugt. Der Helligkeitsverlauf innerhalb einer Darstellung in Längsrichtung des Fehlers ist nach einer vorzugebenden Funktion zu wählen. Vorzugsweise kann eine sogenannte "rised cosine"-Funktion verwendet werden. Die Helligkeit für jeden Bildpunkt berechnet sich nach der Formel

$$(1):\ g' = g - \Delta g$$

wobei g die aktuelle Helligkeit eines vorgegebenen Bildpunktes ist.

Die Helligkeitsabweichung $\Delta g$ eines betroffenen Bildpunktes berechnet sich ausgehend von dem mittleren Helligkeitswert $\bar{g}$ aller Bildpunkte im Bild nach der Formel

$$(2):\ \Delta g = \bar{g} \cdot K/100 \cdot f(x).$$

Dabei gilt für f(X) die Formel

$$(3):\ f(x) = 0.5 \cdot (\cos(x \cdot 2\pi/L) + 1)$$

für x = (-0.5 L .....+0.5L)

Dabei ist L ein Wert für die Länge des Fehlers und K ein Wert für den Kontrast des Fehlers in Prozenten. In den Darstellungen der Fehler im Flächengebilde in drei Zeilen 33, 34, 35, weist nur die mittlere Zeile 34 die volle Helligkeitsabweichung auf. Die beiden äusseren Zeilen 33 und 35 sind um einen Bruchteil, z.B. die Hälfte der Helligkeitsabweichung modifiziert. Wird mit Durchlicht gearbeitet, so ergibt ein Fehler eine Reduktion der Helligkeit und entsprechend muss der Wert der Helligkeitsabweichung vom aktuellen Wert subtrahiert werden. Wird mit Auflicht gearbeitet, so ergibt ein Fehler einen Heil-Dunkel-Übergang und entsprechend muss der Wert der Helligkeitsabweichung für die ersten zwei Zeilen 34 und 35 zum aktuellen Wert addiert und für die dritte Zeile 33 vom aktuellen Wert subtrahiert werden. Das so erhaltene Bild 1, gemäss Fig. 1, zeigt nun auf dem betreffenden Flächengebilde 43, hier einem Gewebe, sechzehn verschiedene Darstellungen von Fehlern, die gemäss einer Systematik angeordnet sind, nämlich Fehler kurzer Länge links im Bild, Fehler grosser Länge rechts im Bild, Fehler mit starker Kontrastwirkung oben im Bild und mit schwacher Kontrastwirkung unten im Bild. Man erkennt dabei, dass Fehler unten links im Bild weniger auffallen als solche oben rechts im Bild. Im Prinzip macht man dieselben Feststellungen wenn man eine analoge Darstellung von Fehlern betrachtet, wie sie in der Fig. 2 in einem vergleichsweise grobmaschigen Gewebe auftreten können. Dabei erkennt man aber, dass die Fehler ganz allgemein weniger auffallen und teilweise gar nicht erkannt werden. Dies insbesondere bei Fehlern unten links im Bild. Durch den Einbau von Empfindlichkeitskurven 22 - 25, wie sie aus der Fig. 3 bekannt sind, lässt sich das Bild 1 in das Bild gemäss Fig. 5 verwandeln. Mit diesen Empfindlichkeitskurven kann nun eine Angabe darüber gemacht werden, was als Fehler toleriert werden soll und was nicht. Bestimmt man beispielsweise aufgrund der Betrachtung des Bildes, dass die Empfindlichkeitskurve 23 bestimmt, was zulässig ist und was nicht, so bedeutet dies, dass die Fehler, die Darstellungen 2, 6, 10, 11, 14, 15, 16 entsprechen, tolerierbar sind und die übrigen Fehler eben nicht. Durch die einzige Angabe einer solchen Empfindlichkeitskurve kann nun für ein Flächengebilde definiert werden, welche Fehler zulässig sind. Dies wird im einfachsten Falle durch Vergleich eines erkannten Fehlers mit den Darstellungen gemäss Fig. 5 erreicht.

Bei der automatischen Beurteilung von Fehlern, geht man folgendermassen vor. Das im ersten Bildspeicher 37 gespeicherte Bild B wird mit Hilfe der Adressierlogik 41 aus dem ersten Bildspeicher 37 in den zweiten Bildspeicher 39 kopiert, wobei ausgewählte Bildpunkte in Abhängigkeit ihrer Lage gemäss Bild 1 (Fig. 1) in der Recheneinheit 38 eine Veränderung ihres ursprünglichen Helligkeitswertes erfahren. Die Veränderung der Helligkeitswerte wird so vollzogen, dass das Bild im zweiten Bildspeicher 39 an vorgebbaren Stellen Darstellungen von typischen Fehlern enthält. So entsteht ein Bild 1 gemäss Fig. 1. Die Ausgabeeinheit 40 stellt anschliessend den Inhalt des zweiten Bildspeichers 39 in einem Bild dar, wobei Skalen für Achsen 19, 20 eingeblendet sind, aus denen die Länge und der Kontrast der Fehler abgelesen werden können. Aufgrund einer visuellen Interpretation oder aufgrund der Skalenwerte können nun Grenzwerte für eine optimale, auf das natürliche Bild der Oberfläche des textilen Flächengebildes abgestimmte Einstellung für ein automatisches Inspektionssystem festgelegt werden. Solche Grenzwerte betreffen z.B. die Länge L und den Kontrast K zulässiger Fehler. Die so gewählten Werte werden diesem eingegeben, so dass es nun automatisch Fehler erkennen und markieren kann, die ausgeschieden werden müssen.

Dem Bild 1 der Ausgabeeinheit 40 kann auch eine Schar Empfindlichkeitskurven 22 - 25, wie sie aus Fig. 3 bekannt sind, überlagert werden, wobei die Parameter einer daraus gewählten Empfindlichkeitskurve Eingabewerte für die automatische Vorrichtung bilden. Es kann aber auch eine aus dem automatischen Inspektionssystem selbst stammende und dessen Arbeitsweise berücksichtigende Charakteristik dem Bild in der Ausgabeeinheit 40 überlagert werden. Beispiele solcher Charakteristiken sind aus der Fig. 7 bekannt und könnten somit als Empfindlichkeitskurven gemäss Fig. 5 überlagert werden.

Die Charakteristiken eines automatischen Inspektionssystems werden durch Einstellgrössen, wie beispielsweise Filterparameter, Grenzfrequenzen und Schwellwerte, entsprechender Verarbeitungsstufen innerhalb des Inspektionssystems bestimmt. Mit der Auswahl einer bestimmten Charakteristik als Empfindlichkeitskurve, sind damit auch die dazugehörenden Einstellgrössen festgelegt.

Oft besteht zwischen einzelnen Einstellgrössen (z.B. Schwellwerten) des Inspektionssystems und dem Fehlerkontrast ein multiplikativer Zusammenhang. In diesem Falle kann die Wirkung solcher Einstellgrössen auf den Verlauf der Empfindlichkeitskurven durch eine vertikale Verschiebung der unveränderten Charakteristik dargestellt werden, falls die vertikale Achse für den Fehlerkontrast logarithmisch skaliert ist. Entsprechendes gilt für Einstellgrössen, welche einen multiplikativen Zusammenhang mit der Fehlerlänge aufweisen (z.B. Grenzfrequenzen). Falls die horizontale Achse für die Fehlerlänge logarithmisch skaliert ist, kann die Wirkung einer multiplikativen Einflussgrösse auf die Fehlerlänge durch eine horizontale Verschiebung der unveränderten Charakteristik veranschaulicht werden. Fig. 7 zeigt die Charakteristik eines automatischen Inspektionssystems in zwei Positionen, die sich durch eine vertikale Verschiebung eines nominalen Fehlerkontrastes K1 nach K2 und eine horizontale Verschiebung einer nominalen Fehlerlänge L1 nach L2 unterscheiden. Die beiden Verschiebungen bewirken eine multiplikative Einflussnahme auf die zugehörigen Einstellgrössen des Inspektionssystems.

Die Charakteristiken sind durch Einstellgrössen wie z.B. Fehlerlänge L1, L2 und Fehlerkontrast K1, K2 wählbar. Gibt man ein solches Wertepaar in die Vorrichtung, beispielsweise über den Anschluss 44 ein, so ist damit eine Charakteristik 45, 46 usw. gewählt und die Vorrichtung erkennt und markiert Fehler deren Parameter rechts oder oberhalb der Charakteristik 45, 46 angesiedelt sind als Fehler. Die Vorrichtung kann Bestandteil eines automatischen Inspektionssystems sein, womit die Ausgabeeinheit 40 gleichzeitig als Einstellorgan für die Empfindlichkeit des Systems dient.

**Patentansprüche**

1. Verfahren zur Beurteilung von Fehlern in textilen Flächengebilden, **dadurch gekennzeichnet, dass** von dem betreffenden Flächengebilde ein Bild (1) ohne Fehler erzeugt und in einem ersten Bildspeicher (37) gespeichert wird, dass anschliessend in einer Recheneinheit (38) in das Bild mindestens zwei künstliche Darstellungen von Fehlern (2 - 17), die in Bezug auf Länge und Kontrast des Fehlers unterschiedlich sind eingebaut und gemäss einer Systematik angeordnet werden und in das Bild eine Empfindlichkeitskurve (22 - 25) eingebaut wird, die definiert welche Fehler zulässig sind und welche nicht, dass diese Darstellungen in einem zweiten Bildspeicher (39) gespeichert werden und dass ausgehend von diesen Darstellungen die Zulässigkeit und Unzulässigkeit eines Fehlers im Flächengebilde durch Vergleich eines erkannten Fehlers mit den künstlichen Darstellungen bestimmt wird.

2. Verfahren nach Anspruch 1, **dadurch gekennzeichnet, dass** das Bild mit einem zweidimensionalen Raster (18) in Felder (A1 - D4) aufgeteilt wird, wobei als erste Dimension die Länge (L) der Fehler und als zweite Dimension der Kontrast (K) der Fehler vorgesehen ist.

3. Verfahren nach Anspruch 2, **dadurch gekennzeichnet, dass** mindestens eine Dimension in logarithmischem Massstab vorgesehen ist.

4. Verfahren nach Anspruch 1, **dadurch gekennzeichnet, dass** dem Bild Empfindlichkeitskurven (22 - 25) überlagert werden.

5. Verfahren nach Anspruch 1, **dadurch gekennzeichnet, dass** die Darstellungen der Fehler durch Veränderung der Helligkeitswerte mehrerer Bildpunkte des Bildes eines Flächengebildes erzeugt werden.

6. Verfahren nach Anspruch 1, **dadurch gekennzeichnet, dass** innerhalb einer Darstellung eines Fehlers ein Helligkeitsverlauf vorgegeben wird, der einer vorgegebenen Funktion (f(x)) entspricht.

7. Verfahren nach Anspruch 1, **dadurch gekennzeichnet, dass** die Darstellung eines Fehlers aus drei nebeneinanderliegenden Zeilen (33, 34, 35) mit Bildpunkten (31) zusammensetzt wird.

8. Vorrichtung zur Durchführung des Verfahrens nach Anspruch 1, **gekennzeichnet durch**, eine Bildaufnahmevorrichtung (36) zur Aufnahme eines Bildes des Flächengebildes ohne Fehler, einen ersten Bildspeicher (37) zum Speichern dieses Bildes, eine Recheneinheit (38) zur Erzeugung von künstlichen Darstellungen von Fehlern im Bild **durch** Veränderung der Helligkeit von Bildpunkten gemäss vorgegebenen Fehlerbeispielen, einen zweiten Bildspeicher (39) zum Speichern von Bildern mit Darstellungen von typischen Fehlern und eine Ausgabeeinheit (40) zur Ausgabe der Bilder, alle in Serie geschaltet, sowie **durch** eine Adressierlogik (41) für Bildpunkte, welche an den ersten und den zweiten Bildspeicher sowie an die Recheneinheit angeschlossen ist.

9. Vorrichtung nach Anspruch 8, **dadurch gekennzeichnet, dass** der erste Bildspeicher fehlerfreie Bilder enthält und dass der zweite Bildspeicher Bilder mit Darstellungen von Fehlern enthält.

10. Vorrichtung nach Anspruch 8, **dadurch gekennzeichnet, dass** die Ausgabeeinheit (40) einen Anschluss (44) für die Eingabe von Charakteristiken einer Inspektionsvorrichtung für Fehler in textilen Flächengebilden aufweist.

## Claims

1. Method for evaluating defects in flat textile structures, **characterized in that** an image (1) of the flat structure without defects is generated and stored in a first image memory (37), **in that** at least two artificial representations of defects (2 - 17) which differ in respect of the length and contrast of the defect are generated in the image and arranged according to a system in a computing unit 38, and a sensitivity curve (22 - 25) is introduced on to the image, determining which defects are admissible and which ones are not, **in that** said representations are stored in a second image memory (39) and **in that** the admissibility or inadmissibility of a defect in the flat structure is evaluated through comparison of a known defect with the artificial representations of defects.

2. Method according to Claim 1, **characterized in that** the image is divided into sections (A1 - D4) by means of a two-dimensional grid (18), the length (L) of the defects constituting the first dimension and the contrast (K) of the defects constituting the second dimension.

3. Method according to Claim 2, **characterized in that** at least one dimension is provided in logarithmic scale.

4. Method according to Claim 1, **characterized in that** sensitivity curves (22 - 25) are superimposed on the image.

5. Method according to Claim 1, **characterized in that** the representations of the defects are generated through variation of the brightness values of several image elements of an image of a flat structure.

6. Method according to Claim 1, **characterized in that** within a representation of a defect there is provided a brightness progression which corresponds to a predefined function (f(x)).

7. Method according to Claim 1, **characterized in that** the representation of a defect is composed of three adjoining rows (33, 34, 35) containing image elements (31).

**8.** Device for the performance of the method according to Claim 1, **characterised by** an image-recording device (36) for recording an image of the flat structure without defects, a first image memory (37) for storing said image, a computing unit (38) for producing artificial representations of defects in the image by variation of the brightness values of pixels accroding to given examples of defects, a second image memory (39) for storing images containing representations of typical defects and a output unit (40) for emitting the images, all connected in series, and an address logic unit (41) for image elements which is connected to the first and second image memory and to the computing unit.

**9.** Device according to Claim 8, **characterized in that** the first image memory contains defect-free images and the second image memory contains images with representations of defects.

**10.** Device according to Claim 8, **characterized in that** the output unit (40) has a connection (44) for the input of characteristics to an inspection device for defects in flat textile structures.

**Revendications**

**1.** Procédé d'évaluation de défauts dans des structures textiles en nappe, **caractérisé en ce que** de la structure en nappe concernée, une image (1) sans défaut est produite et est stockée dans une première mémoire d'image (37), qu'ensuite dans une unité de calcul (38), sont introduites dans l'image au moins deux représentations artificielles de défauts (2-17) qui diffèrent en ce qui concerne la longueur et le contraste du défaut et sont disposées selon une systématique, et qu'une courbe de sensibilité (22-25) est introduite dans l'image qui définit les défauts qui sont admissibles et ceux qui ne le sont pas, **en ce que** ces représentations sont stockées dans une deuxième mémoire d'image (39) et **en ce que**, en partant de ces représentations, on détermine l'admissibilité ou l'inadmissibilité d'un défaut dans la structure en nappe par une comparaison d'un défaut détecté avec les représentations artificielles.

**2.** Procédé selon la revendication 1, **caractérisé en ce que** l'image est divisée par une trame bidimensionnelle (18) en des champs (A1-D4), où est prévu comme première dimension la longueur (L) des défauts et comme seconde dimension le contraste (K) des défauts.

**3.** Procédé selon la revendication 2, **caractérisé en ce qu'**au moins une dimension est prévue à l'échelle logarithmique.

**4.** Procédé selon la revendication 1, **caractérisé en ce que** des courbes de sensibilité (22-25) sont superposées à l'image.

**5.** Procédé selon la revendication 1, **caractérisé en ce que** les représentations des défauts sont produites par une modification des valeurs de luminosité de plusieurs points d'image de l'image d'une structure en nappe.

**6.** Procédé selon la revendication 1, **caractérisé en ce qu'**il est prédéfini à l'intérieur d'une représentation d'un défaut une courbe de luminosité qui correspond à une fonction prédéterminée (f(x)).

**7.** Procédé selon la revendication 1, **caractérisé en ce que** la représentation d'un défaut est composée de trois lignes juxtaposées (33, 34, 35) avec des points d'image (31).

**8.** Dispositif pour la mise en oeuvre du procédé selon la revendication 1, **caractérisé par** un dispositif de prise d'image (36) pour prendre une image de la structure en nappe sans défaut, une première mémoire d'image (37) pour stocker cette image, une unité de calcul (38) pour produire des représentations artificielles de défauts dans l'image par une modification de la luminosité de points d'image selon des exemples de défauts prédéfinis, une deuxième mémoire d'image (39) pour stocker des images avec des représentations de défauts typiques et une unité d'émission (40) pour émettre les images, tous étant montés en série, ainsi que par une logique d'adressage (41) pour des points d'image, qui est raccordée aux première et seconde mémoires d'image ainsi qu'à l'unité de calcul.

**9.** Dispositif selon la revendication 8, **caractérisé en ce que** la première mémoire d'image contient des images sans défaut et **en ce que** la seconde mémoire d'image contient des images avec des représentations de défauts.

**10.** Dispositif selon la revendication 8, **caractérisé en ce que** l'unité d'émission (40) présente une connexion (44) pour l'entrée de caractéristiques d'un dispositif d'inspection pour des défauts dans des structures textiles en nappe.

Fig.1

Fig. 2

Fig.3

Fig. 5

Fig.4

Fig.6

Fig.7